# FASCICULE DE BREVET EUROPEEN

(11) **EP 2 098 421 B1**
(45) Date de publication et mention de la délivrance du brevet: **22.09.2010**
(21) Numéro de dépôt: 09153040.2
(22) Date de dépôt: 17.02.2009
(51) Int. Cl.: B60S 1/52, B62D 25/24

(54) **Agencement pour le montage d'un cache sur un porte-gicleur comportant des moyens de verrouillage**
Anordnung für die Montage einer Abdeckung auf einem Düsenhalter mit Verriegelungsmittel
Arrangement for fixing a cover plate on a nozzle-holder comprising locking means

(30) Priorité: 03.03.2008 FR 0801166
(43) Date de publication de la demande: 09.09.2009
(73) Titulaire: VALEO VISION, 93012 Bobigny (FR)
(72) Inventeur: Vraux, Didier, 93140, BONDY (FR)

(56) Documents cités:
- EP-A- 1 466 796
- DE-A- 4 401 744
- FR-A- 2 716 425

## Description

La présente invention se rapporte à un agencement d'un cache sur un dispositif de nettoyage de glace, notamment de projecteur de véhicule automobile, comportant un porte-gicleur susceptible d'être monté sur un vérin télescopique.

L'invention se rapporte plus particulièrement à un agencement pour le montage d'un cache sur un dispositif de nettoyage de glace, notamment de projecteur de véhicule automobile, qui comporte :
- un porte-gicleur destiné à être monté sur un vérin escamotable dans une ouverture de la carrosserie du véhicule automobile ;
- un cache qui est susceptible d'obturer l'ouverture de la carrosserie lorsque le vérin est escamoté, et qui est monté sur le porte-gicleur selon une direction axiale de montage depuis une position axiale démontée jusqu'à une position axiale montée ;
- des moyens pour fixer de manière démontable le cache sur le porte-gicleur par emboîtement élastique de premiers moyens de fixation du cache dans des deuxièmes moyens de fixation de formes complémentaires du porte-gicleur.

Certains dispositifs de nettoyage comportent généralement une buse ou gicleur alimenté en liquide de lavage sous pression et monté fixe en avant et en dessous de la glace du projecteur. On incorpore habituellement un tel gicleur dans le bouclier ou pare-chocs avant du véhicule.

Il est bien connu que, pour obtenir une efficacité de lavage maximale, le gicleur doit être situé aussi loin que possible en avant de la glace, de manière à ce que les gouttelettes de liquide frappent la glace avec un angle d'incidence aussi élevé que possible par rapport au plan de ladite glace.

En outre, la tendance actuelle est de proposer des projecteurs avec des glaces de fermeture inclinées de manière à épouser la forme plongeante de l'avant des véhicules, ce qui nécessite un éloignement des gicleurs vers l'avant encore plus important.

Il est connu d'incorporer de tels gicleurs à des butoirs fixes rapportés sur l'avant des pare-chocs, ce qui cause des inconvénients en matière de sécurité, d'aérodynamisme et d'esthétique.

Une solution connue pour éviter ces inconvénients consiste à proposer un porte-gicleur escamotable à l'intérieur d'une ouverture pratiquée dans la carrosserie du véhicule. Un tel dispositif de nettoyage comporte un vérin télescopique dont une tige intérieure mobile porte à son extrémité libre le porte-gicleur.

La chambre intérieure du vérin est alimentée directement par l'arrivée du liquide de lavage, et la pression dudit liquide provoque l'actionnement du vérin depuis une position escamotée à l'intérieur de la carrosserie jusqu'à une position étendue en dehors de la carrosserie dans laquelle le gicleur est agencé en vis-à-vis de la glace du projecteur. Puis, le liquide sous pression alimente le gicleur pour effectuer le nettoyage de la glace par aspersion de liquide.

Pour des raisons d'esthétique, il est connu de munir le porte-gicleur d'un cache, parfois appelé enjoliveur ou pièce de style, de façon à ce que, en position escamotée du vérin, le cache vienne obturer l'ouverture pratiquée dans la carrosserie, notamment dans le pare-chocs, en s'adaptant à ses contours et en adoptant généralement la couleur et l'aspect de l'élément dans laquelle elle est insérée.

Un tel cache est par exemple monté sur le porte-gicleur par des moyens de fixation par emboîtement élastique de formes complémentaires. Un tel montage est en effet économique et rapide à effectuer.

EP 1466796 A divulgue un agencement selon le préambule de la revendication 1.

Cependant, on a constaté que dans certaines situations le cache se désolidarise du porte-gicleur, par exemple après un choc léger. En l'absence du cache, l'ouverture de la carrosserie reste béante lorsque le vérin est dans sa position escamotée. Ceci est préjudiciable pour l'aspect esthétique du véhicule. En outre, le gicleur ainsi exposé en permanence à des projections de poussières, risque d'être encrassé et de ne plus pouvoir fournir un jet adéquat pour le nettoyage de la glace.

Pour résoudre notamment ces problèmes, l'invention propose un agencement pour le montage d'un cache sur un dispositif de nettoyage de glace, notamment de projecteur de véhicule automobile, qui comporte :
- un porte-gicleur destiné à être monté sur un vérin escamotable dans une ouverture de la carrosserie du véhicule automobile ;
- un cache qui est susceptible d'obturer l'ouverture de la carrosserie lorsque le vérin est escamoté, et qui est monté sur le porte-gicleur selon une direction axiale de montage depuis une position axiale démontée jusqu'à une position axiale montée ;
- des moyens pour fixer de manière démontable le cache sur le porte-gicleur par emboîtement élastique de premiers moyens de fixation dans des deuxièmes moyens de fixation de formes complémentaires, les premiers moyens de fixation étant déformables élastiquement par rapport aux deuxièmes moyens de fixation entre une position de déboîtement dans laquelle le cache dans sa position axiale montée est libre de coulisser selon la direction de montage par rapport au porte-gicleur et une position d'emboîtement dans les deuxièmes moyens de fixation vers laquelle ils sont rappelés élastiquement ;
- des moyens de verrouillage commandés de manière réversible entre un état de verrouillage, dans lequel les premiers moyens de fixation sont bloqués dans leur position d'emboîtement, et un état de libération, dans lequel la déformation élastique des premiers moyens de fixation par rapport aux deuxièmes moyens de fixation est autorisée afin de

permettre leur déformation entre les positions d'emboîtement et de déboîtement.

Selon d'autres caractéristiques de l'invention :
- le cache comprend les premiers moyens de fixation et le porte-gicleur comprend les deuxièmes moyens de fixation ;
- les premiers moyens de fixation sont déformables élastiquement par rapport aux deuxièmes moyens de fixation selon une direction de déformation transversale à la direction de montage entre la position de déboîtement dans laquelle le cache dans sa position axiale montée est libre de coulisser selon la direction de montage par rapport au porte-gicleur et la position d'emboîtement dans les deuxièmes moyens de fixation vers laquelle ils sont rappelés élastiquement ;
- les moyens de verrouillage comportent au moins une face de verrouillage qui est montée mobile par rapport au porte-gicleur selon une direction de verrouillage globalement perpendiculaire à la direction de déformation entre l'état de verrouillage dans lequel la face de verrouillage est agencée en vis-à-vis des premier moyens de fixation lorsque le cache est en position axiale montée, la face de verrouillage étant fixe selon la direction de déformation ; et l'état de libération dans lequel la face de verrouillage est écartée selon la direction de verrouillage, latéralement par rapport à la direction de déformation, pour autoriser la déformation des premiers moyens de fixation vers leur position de déboîtement ;
- les moyens de verrouillage sont rappelés élastiquement dans leur état de verrouillage ;
- la face de verrouillage est portée par au moins un loquet du porte-gicleur qui est élastiquement déformable en flexion autour d'un axe globalement perpendiculaire à la direction de déformation entre l'état de verrouillage et l'état de libération ;
- l'agencement comporte des moyens pour actionner automatiquement le loquet vers son état de libération durant le

montage du cache selon sa direction de montage sur le porte-gicleur, le loquet étant rappelé élastiquement dans son état de verrouillage lorsque le cache est en position axiale montée et lorsque les premiers moyens de fixation sont en position d'emboîtement ;
- le loquet est monté pivotant autour d'un axe perpendiculaire à la direction de montage, le loquet étant agencé de manière qu'une face de poussée du cache pousse le loquet vers son état de libération durant le déplacement du cache vers sa position axiale montée sur le porte-gicleur ;
- la face de poussée est portée par les premiers moyens de fixation, la face de poussée se déplaçant selon la direction d'emboîtement de manière à s'effacer pour permettre le rappel élastique du loquet dans son état de verrouillage, lorsque les premiers moyens de fixation sont rappelés vers leur position d'emboîtement, ;
- le loquet comporte un tronçon d'actionnement susceptible d'être poussé pour faire pivoter manuellement le loquet vers son état de libération par effet de levier ;
- le tronçon d'actionnement est agencé à proximité d'un élément de poussée manuelle des premiers moyens de fixation vers leur position de déboîtement en opposition avec la face de verrouillage par rapport aux premiers moyens de fixation de manière à permettre l'actionnement manuel simultané du loquet vers son état de libération et des premiers moyens de fixation vers leur position de déboîtement pour le démontage du cache avec un doigt unique ;
- l'agencement selon l'invention comprend des moyens pour commander automatiquement la déformation élastique des premiers moyens de fixation vers leur position de déboîtement durant le montage du cache selon la direction de montage, les premiers moyens de fixation étant rappelés élastiquement dans

leur position d'emboîtement lorsque le cache est en position axiale montée ;
- les premiers moyens de fixation sont formés par au moins une patte axiale déformable élastiquement qui est munie d'un ergot transversal qui est susceptible d'être engagé en vis-à-vis d'une face de rétention porté par au moins une glissière associée formant les deuxièmes moyens de fixation ;
- l'agencement comporte une pluralité de pattes de fixation à chacune desquelles est associé une glissière et un loquet ;
- le au moins un loquet est réalisé venu de matière en une seule pièce avec le porte-gicleur.

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective qui représente l'avant d'un véhicule automobile équipé de dispositifs de nettoyage réalisés selon les enseignements de l'invention ;
- la figure 2 est une vue en perspective qui représente un cache dans une position démontée par rapport à un porte-gicleur du dispositif de nettoyage de la figure 1 ;
- la figure 3 est une vue en section selon un plan de coupe 3-3 de la figure 2 qui représente une patte du cache durant son montage sur le porte-gicleur ;
- la figure 4 est une vue en section similaire à celle de la figure 3 qui représente la patte du cache durant sa déformation élastique au cours du montage ;
- la figure 5 est une vue en perspective similaire à celle de la figure 2 qui représente le cache en cours de montage sur le porte-gicleur ;
- la figure 6 est une vue en section selon le plan de coupe 6-6 de la figure 5 ;
- la figure 7 est une vue similaire à celle de la figure 2 qui représente le cache dans une position montée sur le porte-gicleur ;
- la figure 8 est une vue en section selon le plan de coupe 8-8 de la figure 7 ;
- la figure 9 est une vue en perspective similaire à celle de la figure 2 qui représente le début d'une opération de démontage du cache.

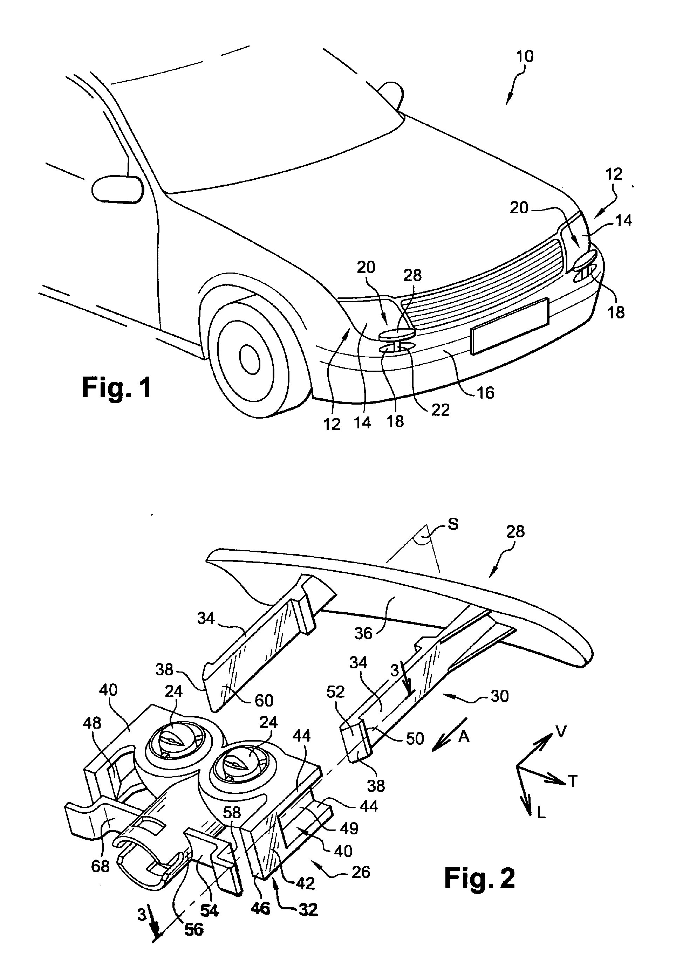

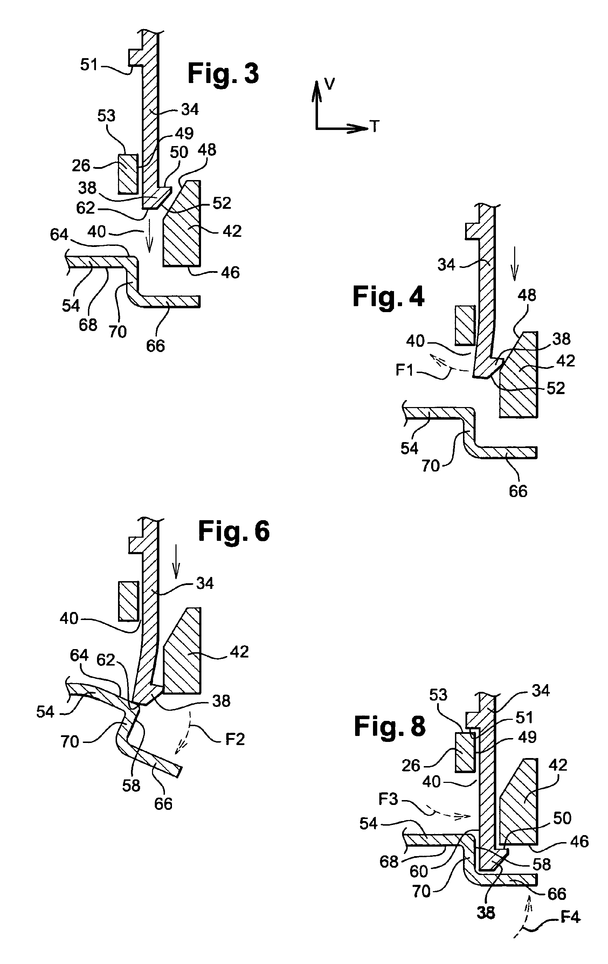

Dans la suite de la description, on adoptera de manière non limitative des orientations longitudinale, verticale et transversale indiquées par le trièdre "L,V,T" des figures 2 et 3.

Dans la suite de la description, des éléments ayant des fonctions identiques, analogues ou similaires seront désignés par des mêmes numéros de référence.

On a représenté à la figure 1 l'avant d'un véhicule automobile 10 comportant deux projecteurs avant 12 qui sont fermés par une glace 14 transparente. Les projecteurs 12 sont agencés au-dessus d'un pare-chocs 16 transversal avant.

Le pare-chocs 16 comporte deux ouvertures 18 qui sont agencées au droit des projecteurs 12.

Un dispositif de nettoyage 20 de la glace 14 de chacun des projecteurs 12 est agencé dans chacune des ouvertures 18. Les deux dispositifs de nettoyage 20 étant symétriques, un seul de ces dispositifs de nettoyage 20 sera décrit en détail par la suite.

Le dispositif de nettoyage 20 comporte un vérin 22 télescopique comprenant une tige mobile axialement entre une position escamotée à l'intérieur du pare-chocs 16 et une position étendue dans laquelle une extrémité libre de la tige est agencée à l'extérieur du pare-chocs 16 en passant à travers l'ouverture 18 associée.

L'extrémité libre de la tige du vérin 22 porte au moins un gicleur 24 par l'intermédiaire d'un porte-gicleur 26. Dans l'exemple représenté à la figure 2, le porte-gicleur 26 porte deux gicleurs 24.

La tige du vérin 22 est creuse de manière à raccorder, par l'intermédiaire du porte-gicleur 26, les gicleurs 24 à une source de liquide de nettoyage sous pression.

Une chambre intérieure (non représentée) du vérin 22 est alimentée directement par l'arrivée du liquide de lavage, et la pression dudit liquide provoque l'actionnement du vérin 22 depuis sa position escamotée jusqu'à sa position étendue en dehors de la carrosserie dans laquelle les gicleurs 24 sont agencés en vis-à-vis de la glace 14 du projecteur 12. Puis, le liquide sous pression alimente chaque gicleur 24 pour effectuer le nettoyage de la glace 14 par aspersion de liquide.

Un cache 28 est monté sur le porte-gicleur 26. Le cache 28 présente un contour de forme et de dimensions similaires à celles de l'ouverture 18 du pare-chocs 16 de manière à obturer l'ouverture 18 lorsque le vérin 22 est en position escamotée. Le cache 28 s'étend dans un plan sensiblement horizontal.

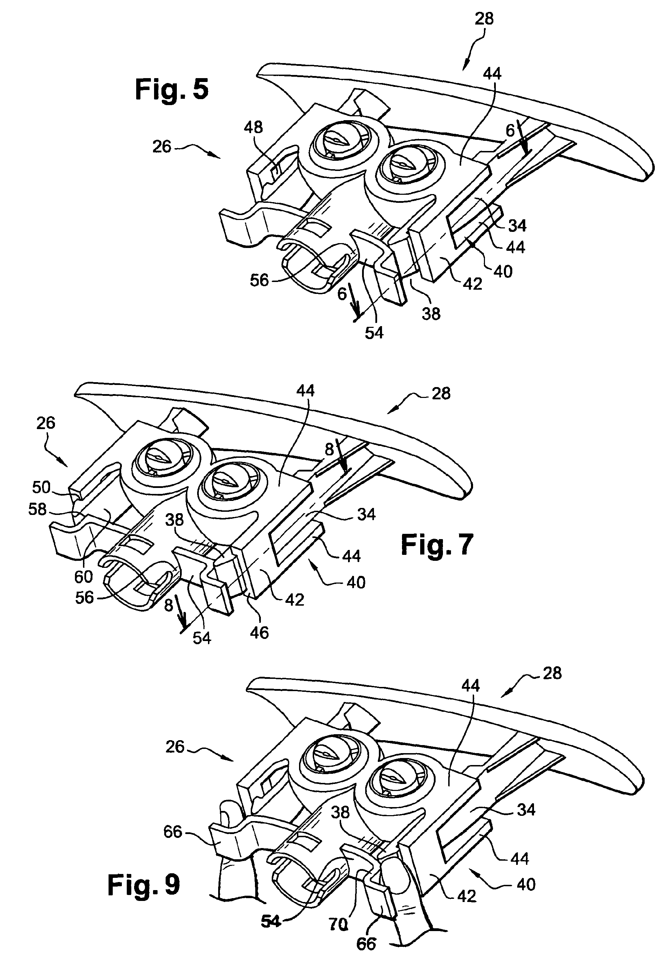

Le cache 28 est plus particulièrement une pièce qui rapportée sur le porte-gicleur 26. Le cache 28 est monté sur le porte-gicleur 26 selon une direction axiale de montage, indiquée par la flèche "A" de la figure 2, vers le bas depuis une position axiale démontée, comme illustré à la figure 2, jusqu'à une position axiale montée, comme illustrée aux figures 7 et 8.

Comme illustré aux figures 1 à 8, la direction de montage est ici orientée verticalement vers le bas. Ainsi, le cache 28 est monté par translation depuis sa position axiale supérieure démontée jusqu'à sa position axiale inférieure montée.

Le cache 28 est fixé sur le porte-gicleur 26 de manière démontable. Ainsi, le cache 28 peut être démonté, par exemple pour permettre d'intervenir pour réparer certains organes du véhicule automobile 10 sans endommager le cache 28.

Le montage du cache 28 sur le porte-gicleur 26 est réalisé par emboîtement élastique de premiers moyens de fixation 30 du cache 28 dans des deuxièmes moyens de fixation 32 de formes complémentaires du porte-gicleur 26.

Plus particulièrement, comme représenté à la figure 2, les premiers moyens de fixation 30 du cache 28 sont formés par deux pattes élastiques de fixation 34 qui s'étendent axialement dans la direction axiale de montage "A" depuis la face inférieure 36 du cache 28 jusqu'à une extrémité inférieure libre.

Les pattes de fixation 34 sont ici réalisées venues de matière en une seule pièce avec le cache 28.

Les deuxièmes moyens de fixation 32 du porte-gicleur 26 sont formés par deux glissières 40 latérales orientées selon la direction axiale de montage "A" de manière à recevoir les pattes de fixation 34.

Les glissières 40 sont ici réalisées venues de matière en une seule pièce avec le porte-gicleur 26.

Les pattes de fixation 34 sont agencées sur une ligne transversale agencée globalement au milieu du cache 28 et du porte-gicleur 26. Les deux pattes de fixation 34, ainsi que les deux glissières 40 associées, présentent une structure identique symétriquement à un plan longitudinal vertical de symétrie "S". Par la suite on ne décrira donc qu'une seule patte de fixation 34 et sa glissière 40 associée, la description étant applicable par symétrie à l'autre patte de fixation 34 et à sa glissière associée 40.

Par la suite, le terme "intérieur" sera utilisé pour désigner une direction transversale tournée vers le plan de symétrie "S" des pattes de fixation 34, tandis que le terme "extérieur" sera utilisé pour désigner une direction transversale tournée dans un sens opposé.

La glissière 40 est formée par une âme 42 qui s'étend dans un plan longitudinal vertical et qui est flanquée de deux ailes 44 transversales verticales s'étendant vers l'intérieur du porte-gicleur 26. Le bord intérieur des deux ailes 44 est fixé à une face latérale extérieure 49 du porte-gicleur 26. La glissière 40 est ainsi délimitée transversalement par la face latérale extérieure 49 et par l'âme 42, et elle est délimitée longitudinalement par les deux ailes 44.

Dans le mode de réalisation représenté aux figures 1 à 9, l'âme 42 est décalée verticalement vers le bas par rapport à la face transversale extérieure 49 du porte-gicleur 26.

L'âme 42 est délimitée verticalement par une face d'extrémité inférieure 46 et une face d'extrémité supérieure 48.

L'extrémité libre de la patte de fixation 34 comporte un ergot 38 qui s'étend en saillie transversalement vers l'extérieur par rapport au corps de la patte de fixation 34. Ainsi l'ergot 38 comporte une face supérieure d'épaulement 50 qui s'étend dans un plan perpendiculaire à la direction axiale de montage "A", c'est-à-dire horizontale, et orientée dans un sens inverse au sens de montage, c'est-à-dire vers le haut.

La patte de fixation 34 est déformable élastiquement selon une direction transversale de déformation environ perpendiculaire à la direction axiale de montage "A" entre une position d'emboîtement dans les deuxièmes moyens de fixation 32 du porte-gicleur 26 vers laquelle elle est rappelée élastiquement et une position intérieure de déboîtement dans laquelle le cache 28 dans sa position axiale montée est libre de coulisser dans les deux sens selon la direction axiale de montage "A" par rapport au porte-gicleur 26.

La patte de fixation 34 est ainsi rappelée élastiquement dans sa position d'emboîtement lorsque le cache 28 est en position axiale montée.

Plus particulièrement, comme représenté à la figure 7, lorsque le cache 28 est dans sa position axiale montée et que les pattes de fixation 34 sont en position d'emboîtement, l'ergot 38 est engagé sous la face d'extrémité inférieure 46 de l'âme 42 de manière que sa face d'épaulement 50 soit agencée en vis-à-vis de la face d'extrémité inférieure 46 de l'âme 42 pour empêcher le retrait du cache 28 vers le haut selon la direction de montage "A". Ainsi, le cache 28 est retenu dans sa position montée par la butée de la face d'épaulement 50 de la patte de fixation 34 avec la face d'extrémité inférieure 46 de l'âme 42 de la glissière 40. La face d'extrémité inférieure 46 de l'âme 42 sera donc désignée par la suite face de rétention 46.

La patte de fixation 34 comporte en outre une deuxième face d'épaulement 51 qui s'étend ici transversalement en saillie vers l'intérieur depuis un tronçon supérieur de la patte de fixation 34. La deuxième face d'épaulement est tournée vers le bas de manière à former une face d'arrêt 51 par butée contre une face butoir 53 du porte-gicleur 26 afin d'arrêter le déplacement du cache 28 vers le bas selon la direction de montage en position montée sur le porte-gicleur 26.

Ainsi, en position montée et emboîtée, le cache 28 est immobilisé verticalement dans un premier sens par la butée entre la face d'épaulement 50 et la face d'extrémité inférieure 46 de l'âme 42, et dans un deuxième sens par la butée entre la face d'arrêt 51 et la face de butoir 53 du porte-gicleur 26. En outre le cache 28 est aussi immobilité transversalement dans les deux sens la butée entre la patte de fixation 34 avec l'âme 42 de la glissière 40 et la face latérale extérieure 49 du porte-gicleur 26, et longitudinalement par la butée entre des pattes de fixation 34 avec les ailes 44 des glissières 40.

En variante non représentée, les glissières et les différentes faces de butée sont dimensionnées de manière que la patte de fixation soit retenue en position montée avec jeu selon une ou plusieurs direction(s) afin de laisser au cache des degrés de liberté.

Durant le déplacement du cache 28 sur le porte-gicleur 26 vers sa position montée, la patte de fixation 34 est déformée élastiquement dans sa position de déboîtement pour que l'ergot 38 puisse contourner l'âme 42 de la glissière 40 vers l'intérieur, sans quoi une face inférieure 52 de l'ergot 38 buterait contre la face d'extrémité supérieure 48 de l'âme 42.

Afin de simplifier le montage du cache 28 sur le porte-gicleur 26, l'agencement comporte des moyens pour commander automatiquement la déformation élastique des pattes de fixation 34 vers leur position de déboîtement durant le montage du cache 28 par rapport au porte-gicleur 26 selon la direction axiale de montage "A" vers le bas.

A cet effet, la face inférieure 52 de l'ergot 38 est inclinée par rapport à la direction axiale de montage "A" de manière à former une rampe de guidage 52 qui, par contact avec la face d'extrémité supérieure 48 de l'âme 42 de la glissière 40 durant son déplacement vers le bas selon la direction axiale de montage "A", provoque la déformation de la patte de fixation 34 vers sa position de déboîtement à la manière d'un suiveur de came glissant sur une came.

Afin d'améliorer le guidage de la patte de fixation 34 vers sa position de déboîtement, la face d'extrémité supérieure 48 de la glissière 40 présente un plan incliné parallèle à la rampe de guidage 52, comme représenté à la figure 3.

En variante, une seule desdites deux faces 48, 52 présente un plan incliné.

L'agencement pour le montage d'un cache sur un dispositif de nettoyage de glace selon la présente invention, comprend des moyens de verrouillage commandés de manière réversible entre :
- un état de verrouillage dans lequel les premiers moyens de fixation 30 sont bloqués dans leur position d'emboîtement, et
- un état de libération dans lequel la déformation élastique des premiers moyens de fixation 30 par rapport aux deuxièmes moyens de fixation 32 est autorisée afin de permettre leur déformation entre les positions d'emboîtement et de déboîtement.

Les moyens de verrouillage comportent deux loquets 54 qui sont agencés sur le porte-gicleur 26.

Les loquets 54 sont ici réalisés venus de matière en une seule pièce avec le porte-gicleur 26.

Les loquets 54 sont identiques et sont agencés de manière symétrique sur le porte-gicleur 26 par rapport au même plan de symétrie "S" que les pattes de fixation 34 et les glissières 40. Par la suite, on ne décrira donc qu'un seul loquet 54, la description étant applicable à l'autre loquet 54 par symétrie par rapport au plan de symétrie "S".

Le loquet 54 se présente sous la forme d'un bras qui s'étend transversalement vers l'extérieur depuis une paroi 56 du porte-gicleur 26 qui est décalée transversalement vers l'intérieur par rapport aux glissières 40, jusqu'à une face d'extrémité libre 58 qui s'étend dans un plan vertical longitudinal.

Le loquet 54 est élastiquement déformable en flexion autour d'un axe globalement perpendiculaire à la direction de déformation des pattes de fixation 34 à la manière d'une poutre encastrée dans la paroi 56 du porte-gicleur 26. Dans l'exemple représenté aux figures, le loquet 54 est monté déformable en flexion autour d'un axe longitudinal qui est aussi perpendiculaire à la direction axiale de montage "A".

Ainsi le loquet 54 est susceptible d'occuper :
- l'état de verrouillage dans lequel la face d'extrémité libre 58 du loquet 54 est agencée transversalement en vis-à-vis d'une face intérieure 60 d'une portion d'extrémité libre de la patte de fixation 34 en position montée et emboîtée sur le porte-gicleur 26, comme représenté à la figure 7, pour empêcher la patte de fixation 34 de se déformer vers sa position de déboîtement, et
- l'état de libération dans lequel la face d'extrémité libre 58 du loquet 54 est écartée latéralement, ici vers le bas, selon une direction de verrouillage pour autoriser la déformation de la patte de fixation 34 vers sa position de déboîtement.

Le loquet 54 est rappelé élastiquement vers son état de verrouillage.

La face d'extrémité libre du loquet 54 forme ainsi une face de verrouillage 58 qui est montée mobile selon une direction de verrouillage qui correspond ici sensiblement à la direction de montage.

En outre, le loquet 54 est agencé de telle manière que l'extrémité libre de la patte de fixation 34 forme une face de poussée 62 qui pousse la face supérieure 64 d'un tronçon d'extrémité transversale libre du loquet 54 vers son état de libération durant le déplacement du cache 28 sur le porte-gicleur 26 vers sa position montée, de manière à faire levier sur le loquet 54.

Ainsi, le loquet 54 est actionné automatiquement vers son état de libération durant le montage du cache 28 par l'effort axial de montage vers le bas exercé sur le cache 28 pour le déplacer vers sa position montée. L'effort axial de montage est de préférence inférieur à 70 N (Newtons).

Le loquet 54 est ensuite rappelé élastiquement vers son état de verrouillage lorsque le cache 28 est en position axiale montée et lorsque la patte de fixation 34 s'est effacée en position d'emboîtement selon la direction transversale d'emboîtement, laissant ainsi l'espace libre pour le retour du loquet 54 vers sont état de verrouillage, comme représenté à la figure 8.

Ainsi, lors du montage, la déformation du loquet 54 vers son état de libération est réalisée automatiquement durant le déplacement axial du cache 28 vers sa position montée. Une fois que le cache 28 est en position montée, le loquet 54 reprend immédiatement, de par son élasticité propre, son état de verrouillage.

Pour démonter le cache 28 du porte-gicleur 26, il est prévu d'actionner manuellement le loquet 54 vers son état de libération. De manière à faciliter l'actionnement manuel du loquet 54 vers son état de libération, il est prolongé par un tronçon d'actionnement 66 qui est décalé verticalement vers le bas par rapport à la face de verrouillage 58 de manière à être agencé verticalement vers le bas par rapport à l'extrémité libre de la patte de fixation 34 en position montée et emboîtée.

Plus précisément, comme représenté au figures 1 à 9, le tronçon d'actionnement 66 est raccordé à la face inférieure 68 d'un tronçon d'extrémité libre du loquet 54 par l'intermédiaire d'un tronçon de jonction 70 qui s'étend verticalement. Cette configuration permet de réserver un espace pour recevoir le tronçon d'extrémité inférieure libre de la patte de fixation 34 entre l'extrémité inférieure de la glissière 40 et le tronçon d'actionnement 66 du loquet 54, comme représenté à la figure 8.

Le tronçon d'actionnement 66 forme ainsi une zone d'actionnement manuel sur laquelle un opérateur est susceptible d'appuyer verticalement vers le bas pour faire levier sur le loquet 54 afin de le faire fléchir manuellement dans son état de libération.

Avantageusement, le tronçon d'actionnement 66 est agencé à proximité de l'ergot 38 de la patte de fixation 34 de manière qu'un opérateur puisse simultanément maintenir le loquet 54 vers son état de libération à l'encontre de sa force de rappel élastique et pousser transversalement l'ergot 38 de la patte de fixation 34, en position montée, vers sa position de déboîtement avec un doigt unique, ou le cas échéant avec un outil unique.

Avantageusement, les deux pattes de fixation 34 sont espacées transversalement l'une de l'autre d'une distance adaptée pour qu'un opérateur puisse déverrouiller et déboîter simultanément les deux pattes de verrouillage respectivement avec le pouce et l'index d'une même main. Ainsi, l'opérateur peut saisir le cache 28 de sa main libre et le tirer verticalement vers sa position démontée tandis que de son autre main il maintient simultanément le loquet 54 en état de libération et les pattes de fixation 34 en position de déboîtement.

L'opération de montage du cache 28 sur le porte-gicleur 26 va maintenant être décrite en détail.

Tout d'abord, l'extrémité libre des pattes de fixation 34 est agencée en vis-à-vis de l'extrémité supérieure des glissières 40, le cache 28 étant en position axiale démontée.

Puis, l'effort axial de montage est appliqué vers le bas au cache 28 de manière à le déplacer vers le bas pour engager l'extrémité libre des pattes de fixation 34 dans les glissières 40 associées selon la direction de montage "A" comme représenté à la figure 3.

Puis, comme illustré par la flèche "F1" de la figure 4, la rampe de guidage des pattes de fixation 34 entre en contact avec la face supérieure 48 de l'âme 42 des glissières 40 et elle glisse sur cette dernière. Les pattes de fixation 34 sont ainsi fléchies vers leur position de déboîtement par le déplacement axial provoqué par l'effort axial de montage à la manière de suiveurs de came.

Les pattes de fixation 34 sont maintenues dans leur position de déboîtement par contact de l'extrémité transversale libre de l'ergot 38 contre la face intérieure de l'âme 42 de la glissière 40.

En poursuivant le coulissement vers le bas du cache 28, comme représenté aux figures 5 et 6, l'extrémité des pattes de fixation 34, qui sont toujours en position déboîtée, entre en contact avec la surface supérieure 64 de l'extrémité libre du loquet 54. Sollicité par les pattes de fixation 34, le loquet 54 fléchit alors vers son état de libération, comme indiqué par la flèche "F2" de la figure 6. Le cache 28 n'est pas encore dans sa position montée.

Comme illustré aux figures 7 et 8, lorsque le cache 28 atteint sa position montée, les ergots 38 dépassent l'extrémité inférieure de la glissière 40 et les pattes de fixation 34 sont alors rappelées élastiquement vers leur position d'emboîtement, comme représenté par la flèche "F3" de la figure 7.

Les pattes de fixation 34 s'étant ainsi effacées transversalement dans la direction d'emboîtement, les loquets 54 sont ensuite rappelés vers leur état de verrouillage de manière à empêcher tout déboîtement intempestif des pattes de fixation 34, comme représenté par la flèche "F4" de la figure 8.

Comme représenté à la figure 9, lorsqu'on désire démonter le cache 28, un opérateur introduit ses doigts entre le tronçon d'actionnement 66 du loquet 54 et l'extrémité de la glissière 40 en appliquant un effort vertical vers le bas pour faire fléchir le loquet 54 vers son état de libération.

Puis, ou simultanément, tout en appliquant l'effort vertical vers le bas sur les loquets 54 dans leur état de libération, les doigts glissent transversalement le long du tronçon d'actionnement 66 en direction des ergots 38 des pattes de fixation 34 afin de leur appliquer un effort transversal de déboîtement pour les faire fléchir vers leur position de déboîtement.

Les ergots 38 forment ainsi des éléments de poussée manuelle des pattes de fixation 34 vers leur position de déboîtement.

En variante, l'opération de démontage manuel peut être réalisée au moyen d'un outil tel qu'une pince, chaque mord de la pince réalisant les étapes décrites ci-dessus à la place des doigts.

Grâce à l'agencement réalisé selon les enseignements de l'invention, le cache 28 est verrouillé dans sa position montée par les loquets 54, évitant ainsi des démontages intempestifs. Un cache 28 monté sur le porte-gicleur 26 avec un tel agencement est par exemple capable de résister à des efforts d'arrachement de l'ordre de 150 N.

En outre, cet agencement est très simple d'utilisation car, du fait de l'automatisation du verrouillage, il ne nécessite pas plus d'opération pour le montage que les agencements déjà existant mais dénués de moyens de verrouillage. Il est juste besoin d'appliquer un effort de montage sur la cache 28 suffisant pour actionner les loquets 54 dans leur état de libération.

De plus, les loquets 54 sont munis de tronçons d'actionnement 66 judicieusement agencés pour permettre un démontage du cache aisément réalisable par une personne seule.

## Revendications

1. Agencement d'un cache (28) et d'un dispositif de nettoyage de glace (20), notamment de projecteur (12) de véhicule automobile (10), qui comporte :
- un porte-gicleur (26) destiné à être monté sur un vérin escamotable (22) dans une ouverture (18) de la carrosserie (16) du véhicule automobile (10) ;
- un cache (28) qui est susceptible d'obturer l'ouverture (18) de la carrosserie (16) lorsque le vérin (22) est escamoté, et qui est monté sur le porte-gicleur (26) selon une direction axiale de montage (A) depuis une position axiale démontée jusqu'à une position axiale montée ;
- des moyens pour fixer de manière démontable le cache (28) sur le porte-gicleur (26) par emboîtement élastique de premiers moyens de fixation (30) dans des deuxièmes moyens de fixation (32) de formes complémentaires, les premiers moyens de fixation (30) étant déformables élastiquement par rapport aux deuxièmes moyens de fixation (32) entre une position de déboîtement dans laquelle le cache (28) dans sa position axiale montée est libre de coulisser selon la direction de montage (A) par rapport au porte-gicleur (26) et une position d'emboîtement dans les deuxièmes moyens de fixation (32) vers laquelle ils sont rappelés élastiquement ;
**caractérisé en ce qu'**il comporte des moyens de verrouillage (54) commandés de manière réversible entre :
- un état de verrouillage dans lequel les premiers moyens de fixation (30) sont bloqués dans leur position d'emboîtement, et
- un état de libération dans lequel la déformation élastique des premiers moyens de fixation (30) par rapport aux deuxièmes moyens de fixation (32) est autorisée afin de permettre leur déformation entre les positions d'emboîtement et de déboîtement.

2. Agencement selon la revendication précédente, **caractérisé en ce que** le cache (28) comprend lesdits premiers moyens de fixation (30) et le porte-gicleur (26) comprend lesdits deuxièmes moyens de fixation (32).

3. Agencement selon l'une quelconque des revendications précédentes, **caractérisé en ce que** lesdits premiers moyens de fixation (30) sont déformables élastiquement par rapport aux dits deuxièmes moyens de fixation (32) selon une direction de déformation transversale à la direction de montage (A) entre la position de déboîtement dans laquelle le cache (28) dans sa position axiale montée est libre de coulisser selon la direction de montage (A) par rapport au porte-gicleur (26) et la position d'emboîtement dans lesdits deuxièmes moyens de fixation (32) vers laquelle ils sont rappelés élastiquement.

4. Agencement selon l'une quelconque des revendications précédentes, **caractérisé en ce que** les moyens de verrouillage (54) comportent au moins une face de verrouillage (58) qui est montée mobile par rapport au porte-gicleur (26) selon une direction de verrouillage globalement perpendiculaire à la direction de déformation entre :
- l'état de verrouillage dans lequel la face de verrouillage (58) est agencée en vis-à-vis des premier moyens de fixation (30) lorsque le cache (28) est en position axiale montée, la face de verrouillage (58) étant fixe selon la direction de déformation, et
- l'état de libération dans lequel la face de verrouillage (58) est écartée selon la direction de verrouillage, latéralement par rapport à la direction de déformation, pour autoriser la déformation des premiers moyens de fixation (30) vers leur position de déboîtement.

5. Agencement selon l'une quelconque des revendications précédentes, **caractérisé en ce que** les moyens de verrouillage (54) sont rappelés élastiquement dans leur état de verrouillage.

6. Agencement selon la revendication précédente, **caractérisé en ce que** la face de verrouillage (58) est portée par au moins un loquet (54) du porte-gicleur (26) qui est élastiquement déformable en flexion autour d'un axe globalement perpendiculaire à la direction de déformation entre l'état de verrouillage et l'état de libération.

7. Agencement selon la revendication précédente, **caractérisé en ce qu'**il comporte des moyens (62, 64) pour actionner automatiquement le loquet (54) vers son état de libération durant le montage du cache (28) selon sa direction de montage (A) sur le porte-gicleur (26), le loquet (54) étant rappelé élastiquement dans son état de verrouillage lorsque le cache (28) est en position axiale montée et lorsque les premiers moyens de fixation (30) sont en position d'emboîtement.

8. Agencement selon la revendication précédente, **caractérisé en ce que** le loquet (54) est monté pivotant autour d'un axe perpendiculaire à la direction de montage (A), et **en ce que** le loquet (54) est agencé de manière qu'une face de poussée (62) du cache (28) pousse le loquet (54) vers son état de libération durant le déplacement du cache (28) vers sa position axiale montée sur le porte-gicleur (26).

9. Agencement selon la revendication précédente, **caractérisé en ce que** la face de poussée (62) est portée par les premiers moyens de fixation (30), et **en ce que**, lorsque les premiers moyens de fixation (30) sont rappelés vers leur position d'emboîtement, la face de poussée (62) se déplace selon la direction d'emboîtement de manière à s'effacer pour permettre le rappel élastique du loquet (54) dans son état de verrouillage.

10. Agencement selon la revendication précédente, **caractérisé en ce que** le loquet (54) comporte un tronçon d'actionnement (66) susceptible d'être poussé pour faire pivoter manuellement le loquet (54) vers son état de libération par effet de levier.

11. Agencement selon la revendication précédente, **caractérisé en ce que** le tronçon d'actionnement est agencé à proximité d'un élément de poussée (38) manuelle des premiers moyens de fixation (30) vers leur position de déboîtement en opposition avec la face de verrouillage (58) par rapport aux premiers moyens de fixation (30) de manière à permettre l'actionnement manuel simultané du loquet (54) vers son état de libération et des premiers moyens de fixation (30) vers leur position de déboîtement pour le démontage du cache (28) avec un doigt unique.

12. Agencement selon l'une quelconque des revendications précédentes, **caractérisé en ce qu'**il comprend des moyens (48, 52) pour commander automatiquement la déformation élastique des premiers moyens de fixation (30) vers leur position de déboîtement durant le montage du cache (28) selon la direction de montage (A), les premiers moyens de fixation (30) étant rappelés élastiquement dans leur position d'emboîtement lorsque le cache (28) est en position axiale montée.

13. Agencement selon l'une quelconque des revendications précédentes, **caractérisé en ce que** les premiers moyens de fixation (30) sont formés par au moins une patte axiale (34) déformable élastiquement qui est munie d'un ergot transversal (38) qui est susceptible d'être engagé en vis-à-vis d'une face de rétention (46) porté par au moins une glissière (40) associée formant les deuxièmes moyens de fixation (32).

14. Agencement selon la revendication précédente prise en combinaison avec l'une quelconque des revendications 6 à 13, **caractérisé en ce qu'**il comporte une pluralité de pattes de fixation (34) à chacune desquelles est associé une glissière (40) et un loquet (54).

15. Agencement selon l'une quelconque des revendications 6 à 14, **caractérisé en ce que** le au moins un loquet (54) est réalisé venu de matière en une seule pièce avec le porte-gicleur (26).

## Claims

1. Arrangement for a shield (28) and a glass cleaning device (20), in particular for a headlight (12) of a motor vehicle (10), which comprises:
- a nozzle-holder (26) which is designed to be mounted on a jack (22) which is retractable into an opening (18) in the bodywork (16) of the motor vehicle (10);
- a shield (28) which can close the opening (18) in the bodywork (16) when the jack (22) is retracted, and which is mounted on the nozzle-holder (26) according to an axial mounting position (A), from a detached axial position to a mounted axial position;
- means for securing the shield (28) in a detachable manner onto the nozzle-holder (26) by resilient fitting of first securing means (30) into second securing means (32) which have complementary forms, the first securing means (30) being resiliently deformable relative to the second securing means (32), between a position of release, in which the shield (28) in its mounted axial position is free to slide according to the direction of mounting (A), relative to the nozzle-holder (26), and a position of fitting in the second securing means (32), towards which they are returned resiliently; **characterised in that** it comprises locking means (54) which are commanded in a reversible manner between:
- a locking state, in which the first securing means (30) are locked in their fitting position; and
- a release state, in which the resilient deformation of the first securing means (30) relative to the second securing means (32) is allowed, in order to permit their deformation between the positions of fitting and release.

2. Arrangement according to the preceding claim, **characterised in that** the shield (28) comprises the said first securing means (30), and the nozzle-holder (26) comprises the said second securing means (32).

3. Arrangement according to any one of the preceding claims, **characterised in that** the said first securing means (30) are resiliently deformable relative to the said second securing means (32), according to a direction of deformation which is transverse to the direction of mounting (A), between the release position in which the shield (28) in its mounted axial position is free to slide according to the direction of mounting (A) relative to the nozzle holder (26), and the position of fitting in the said second securing means (32), towards which they are returned resiliently.

4. Arrangement according to any one of the preceding claims, **characterised in that** the locking means (54) comprise at least one locking surface (58) which is mounted such as to be mobile relative to the nozzle holder (26), according to a direction of locking which is globally perpendicular to the direction of deformation, between:
- the locking state, in which the locking surface (58) is arranged opposite first securing means (30), when the shield (28) is in the axial mounted position, the locking surface (58) being fixed according to the direction of deformation; and
- the release state, in which the locking surface (58) is spaced according to the direction of locking, laterally relative to the direction of deformation, in order to permit deformation of the first securing means (30) towards their release position.

5. Arrangement according to any one of the preceding claims, **characterised in that** the locking means (54) are returned resiliently to their locking state.

6. Arrangement according to the preceding claim, **characterised in that** the locking surface (58) is supported by at least one latch (54) of the nozzle holder (26), which is resiliently deformable in flexure around an axis which is globally perpendicular to the direction of deformation, between the locking state and the release state.

7. Arrangement according to the preceding claim, **characterised in that** it comprises means (62, 64) for activating the latch (54) automatically towards its release state during mounting of the shield (28), according to its direction of mounting (A) on the nozzle holder (26), the latch (54) being returned resiliently to its locking state when the shield (28) is in the axial mounted position, and when the first securing means (30) are in the fitted position.

8. Arrangement according to the preceding claim, **characterised in that** the latch (54) is fitted such as to pivot around an axis which is perpendicular to the direction of mounting (A), and **in that** the latch (54) is arranged such that a thrust surface (62) of the shield (28) thrusts the latch (54) towards its state of release during the displacement of the shield (28), towards is axial position mounted on the nozzle holder (26).

9. Arrangement according to the preceding claim, **characterised in that** the thrust surface (62) is supported by the first securing means (30), and **in that**, when the first securing means (30) are returned to their fitting position, the thrust surface (62) is displaced according to the direction of fitting, such as to be moved aside in order to permit the resilient return of the latch (54) into its locking state.

10. Arrangement according to the preceding claim, **characterised in that** the latch (54) comprises an activation section (66) which can be thrust in order to make the latch (54) pivot manually towards its release state by means of lever effect.

11. Arrangement according to the preceding claim, **characterised in that** the activation section is arranged in the vicinity of an element (38) for manual thrusting of the first securing means (30) towards their release position, in opposition with the locking surface (58), relative to the first securing means (30), such as to permit simultaneous manual activation of the latch (54) towards its release state, and of the first securing means (30) towards their release position, for detachment of the shield (28) using a single finger.

12. Arrangement according to any one of the preceding claims, **characterised in that** it comprises means (48, 52) for commanding automatically the resilient deformation of the first securing means (30) towards their release position, during mounting of the shield (28), according to the mounting direction (A), the first securing means (30) being returned resiliently to their fitting position when the shield (28) is in the axial mounted position.

13. Arrangement according to any one of the preceding claims, **characterised in that** the first securing means (30) are formed by at least one resiliently deformable axial lug (34) which is provided with a transverse pin (38) which can be engaged opposite a retention surface (46) which is supported by at least one associated slide (40), thus forming the second securing means (32).

14. Arrangement according to the preceding claim, taken in combination with any one of claims 6 to 13, **characterised in that** it comprises a plurality of securing lugs (34), with each of which there is associated a slide (40) and a latch (54).

15. Arrangement according to any one of claims 6 to 14, **characterised in that** the at least one latch (54) is integral in a single piece with the nozzle holder (26).

## Patentansprüche

1. Anordnung einer Abdeckung (28) und einer Scheibenreinigungsvorrichtung (20), insbesondere für einen Scheinwerfer (12) eines Kraftfahrzeugs (10), die umfasst:
- einen Spritzdüsenhalter (26), der zur Montage auf einem in einer Öffnung (18) der Karosserie (16) des Kraftfahrzeugs (10) versenkbaren Hubzylinder (22) bestimmt ist;
- eine Abdeckung (28), die die Öffnung (18) der Karosserie (16) zu verschließen vermag, wenn der Hubzylinder (22) versenkt ist, und die auf dem Spritzdüsenhalter (26) in einer axialen Montagerichtung (A) zwischen einer demontierten
axialen Position und einer montierten axialen Position angebracht ist;
- Mittel zum lösbaren Befestigen der Abdeckung (28) auf dem Spritzdüsenhalter (26) durch elastisches Einstecken erster Befestigungsmittel (30) in komplementär geformte zweite Befestigungsmittel (32), wobei die ersten Befestigungsmittel (30) bezüglich der zweiten Befestigungsmittel (32) zwischen einer ausgesteckten Position, in der die Abdeckung (28) in ihrer montierten axialen Position in der Montagerichtung (A) bezüglich des Spritzdüsenhalters (26) ungehindert gleitet, und einer in die zweiten Befestigungsmittel (32) eingesteckten Position, in die diese elastisch zurückgestellt werden, elastisch verformbar sind;
**dadurch gekennzeichnet, dass** sie Verriegelungsmittel (54) umfasst, die reversibel betätigt werden zwischen
- einem Verriegelungszustand, in dem die ersten Befestigungsmittel (30) in ihrer eingesteckten Position arretiert sind, und
- einem Freigabezustand, in dem die elastische Verformung der ersten Befestigungsmittel (30) bezüglich der zweiten Befestigungsmittel (32) gestattet ist, um ihre Verformung zwischen der eingesteckten und der ausgesteckten Position zu ermöglichen.

2. Anordnung nach dem vorhergehenden Anspruch,
**dadurch gekennzeichnet, dass** die Abdeckung (28) die ersten Befestigungsmittel (30) umfasst und der Spritzdüsenhalter (26) die zweiten Befestigungsmittel (32) umfasst.

3. Anordnung nach einem der vorhergehenden Ansprüche,
**dadurch gekennzeichnet, dass** die ersten Befestigungsmittel (30) bezüglich der zweiten Befestigungsmittel (32) in einer zur Montagerichtung (A) quer verlaufenden Verformungsrichtung zwischen der ausgesteckten Position, in der die Abdeckung (28) in ihrer montierten axialen Position in der Montagerichtung (A) bezüglich des Spritzdüsenhalters (26) ungehindert gleitet, und der in die zweiten Befestigungsmittel (32) eingesteckten Position, in die diese elastisch zurückgestellt werden, elastisch verformbar sind.

4. Anordnung nach einem der vorhergehenden Ansprüche,
**dadurch gekennzeichnet, dass** die Verriegelungsmittel (54) wenigstens eine Verriegelungsfläche (58) aufweisen, die bezüglich des Spritzdüsenhalters (26) in einer zur Verformungsrichtung allgemein senkrechten Verriegelungsrichtung beweglich angebracht ist zwischen
- dem Verriegelungszustand, in dem die Verriegelungsfläche (58) gegenüber den ersten Befestigungsmitteln (30) angeordnet ist, wenn sich die Abdeckung (28) in der montierten axialen Position befindet, wobei die Verriegelungsfläche (58) in der Verformungsrichtung feststehend ist, und
- dem Freigabezustand, in dem die Verriegelungsfläche (58) in der Verriegelungsrichtung bezüglich der Verformungsrichtung seitlich abgerückt ist, um die Verformung der ersten Befestigungsmittel (30) in Richtung ihrer ausgesteckten Position zu gestatten.

5. Anordnung nach einem der vorhergehenden Ansprüche,
**dadurch gekennzeichnet, dass** die Verriegelungsmittel (54) elastisch in ihren Verriegelungszustand zurückgestellt werden.

6. Anordnung nach dem vorhergehenden Anspruch,
**dadurch gekennzeichnet, dass** die Verriegelungsfläche (58) von wenigstens einem Riegel (54) des Spritzdüsenhalters (26) getragen ist, der um eine zur Verformungsrichtung allgemein senkrechte Achse herum zwischen dem Verriegelungszustand und dem Freigabezustand elastisch biegeverformbar ist.

7. Anordnung nach dem vorhergehenden Anspruch,
**dadurch gekennzeichnet, dass** sie Mittel (62, 64) zum automatischen Betätigen des Riegels (54) in Richtung seines Freigabezustands während der Montage der Abdeckung (28) in ihrer Montagerichtung (A) auf dem Spritzdüsenhalter (26) umfasst, wobei der Riegel (54) in seinen Verriegelungszustand elastisch zurückgestellt wird, wenn sich die Abdeckung (28) in der montierten axialen Position befindet und wenn sich die ersten Befestigungsmittel (30) in der eingesteckten Position befinden.

8. Anordnung nach dem vorhergehenden Anspruch,
**dadurch gekennzeichnet, dass** der Riegel (54) schwenkbar um eine zur Montagerichtung (A) senkrechte Achse herum montiert ist, und dass der Riegel (54) solchermaßen angeordnet ist, dass eine Schubfläche (62) der Abdeckung (28) den Riegel (54) während der Verlagerung der Abdeckung (28) in ihre auf dem Spritzdüsenhalter (26) montierte axiale Position in Richtung seines Freigabezustands schiebt.

9. Anordnung nach dem vorhergehenden Anspruch,
**dadurch gekennzeichnet, dass** die Schubfläche (62) von den ersten Befestigungsmitteln (30) getragen ist, und dass sich die Schubfläche (62), wenn die ersten Befestigungsmittel (30) in ihre eingesteckte Position zurückgestellt sind, in der Einsteckrichtung solchermaßen verlagert, dass sie wegschwenkt, um das elastische Zurückstellen des Riegels (54) in seinen Verriegelungszustand zu ermöglichen.

10. Anordnung nach dem vorhergehenden Anspruch,
**dadurch gekennzeichnet, dass** der Riegel (54) einen Betätigungsabschnitt (66) aufweist, der zum manuellen Schwenken des Riegels (54) durch Hebeleffekt in seinen Freigabezustand gedrückt zu werden vermag.

11. Anordnung nach dem vorhergehenden Anspruch,
**dadurch gekennzeichnet, dass** der Betätigungsabschnitt in der Nähe eines Elements (38) zum manuellen Schieben der ersten Befestigungsmittel (30) in Richtung ihrer ausgesteckten Position entgegen der Verriegelungsfläche (58) in Bezug auf die ersten Befestigungsmittel (30) so angeordnet ist, dass die gleichzeitige manuelle Betätigung des Riegels (54) in Richtung seines Freigabezustands und der ersten Befestigungsmittel (30) in Richtung ihrer ausgesteckten Position zur Demontage der Abdeckung (28) mit einem einzigen Finger möglich ist.

12. Anordnung nach einem der vorhergehenden Ansprüche,
**dadurch gekennzeichnet, dass** sie Mittel (48, 52) zum automatischen Betätigen der elastischen Verformung der ersten Befestigungsmittel (30) in Richtung ihrer ausgesteckten Position während der Montage der Abdeckung (28) in der Montagerichtung (A) aufweist, wobei die ersten Befestigungsmittel (30) in ihre eingesteckte Position elastisch zurückgestellt werden, wenn sich die Abdeckung (28) in der montierten axialen Position befindet.

13. Anordnung nach einem der vorhergehenden Ansprüche,
**dadurch gekennzeichnet, dass** die ersten Befestigungsmittel (30) durch wenigstens einen elastisch verformbaren axialen Arm (34) gebildet sind, der mit einer quer verlaufenden Nase (38) versehen ist, die gegenüber einer Haltefläche (46) eingesteckt zu werden vermag, die von wenigstens einer zugeordneten Gleitführung (40) getragen ist, die die zweiten Befestigungsmittel (32) bildet.

14. Anordnung nach dem vorhergehenden Anspruch in Verbindung mit einem der Ansprüche 6 bis 13,
**dadurch gekennzeichnet, dass** sie mehrere Befestigungsarme (34) aufweist, denen jedem eine Gleitführung (40) und ein Riegel (54) zugeordnet ist.

15. Anordnung nach einem der Ansprüche 6 bis 14,
**dadurch gekennzeichnet, dass** der wenigstens eine Riegel (54) mit dem Spritzdüsenhalter (26) einstückig angeformt ausgeführt ist.
